# EUROPEAN PATENT APPLICATION

(11) **EP 3 136 372 A1**
(43) Date of publication of application: **01.03.2017**
(21) Application number: 15182891.0
(22) Date of filing: 28.08.2015
(51) Int. Cl.: G09B 9/08, G09B 9/30

(54) **IMMERSIVE VEHICLE SIMULATOR APPARATUS AND METHOD**

(71) Applicant: BAE Systems PLC, London SW1Y 5AD (GB)
(72) Inventor: The designation of the inventor has not yet been filed
(74) Representative: BAE SYSTEMS plc Group IP Department

(57) **Abstract**

A mixed reality vehicle control, e.g. flight, simulator comprising a headset (100) for placing over a user's eyes, in use, said headset including a screen, the simulator further comprising a processor configured to display on said screen a three dimensional environment consisting of virtual scenery, one or more interactive controls (204) for enabling a user (200) to simulate vehicle control actions, said processor being further configured to receive, from said one or more interactive controls, data representative of one or more parameters determinative of vehicle movement and update said scenery displayed on said screen in accordance with said parameters so as to simulate vehicle movement therein.

## Description

This invention relates generally to an immersive vehicle simulator apparatus and method and, more particularly, but not necessarily exclusively to an apparatus and method for providing immersive vehicle control simulation, such as flight simulation, for the purposes of training operatives to control a vehicle moving in a three dimensional environment.

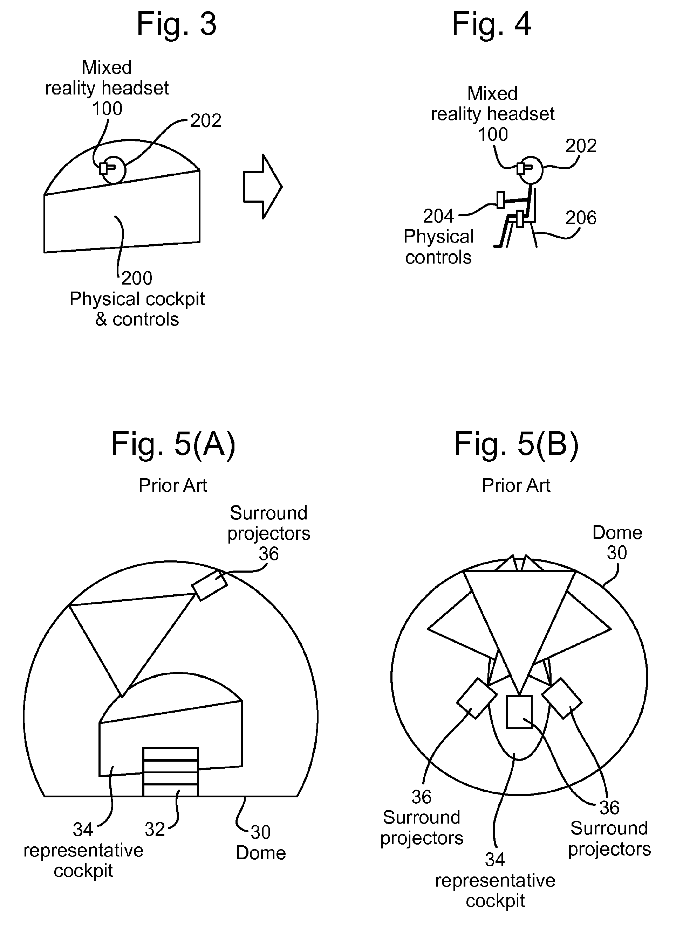

Motion-based simulators using domes are known and, for example, immersive flight simulators are known which, referring to Figure 5 of the drawings, comprise a dome 30 mounted on a motion rig 32 which imparts movement to the dome 30 to simulate yaw, pitch and roll manoeuvers. Within the dome 30, there is provided a cockpit structure 34 including physical controls (e.g. buttons, joysticks, levers, etc.), which allow the user to interact with the simulated vehicle in the same way as they would interact with a real such vehicle. Older systems provided a large flat screen extending substantially vertically across the inner diameter of the dome 30, located in front of the cockpit structure 34, which displays moving images representative of the three dimensional environment in which the simulated vehicle appears to be moving. More recently, however, dome simulation systems have been developed in which the inner surface of the dome itself provides a projection surface onto which a 360° field of view of the three-dimensional environment is projected by a plurality of high-definition projectors 36 with the use of edge blending and warping technology. Thus, the user is provided with a fully immersive simulator which allows them to realistically engage with a training exercise.

Whilst such immersive dome simulators are widely accepted, and are effective in providing a fully immersive and realistic training environment, there are a number of issues associated with systems of this type. Firstly, the physical size of the dome required to effect the simulator has a large footprint and requires a relatively large ground area to accommodate it, but also makes transportation thereof logistically complex and costly. Furthermore, there is a significant cost implication in relation to the requirement for several high specification projectors, lighting, air conditioning and other support systems, the overall cost of which is further increased by the requirement for high level ongoing maintenance. Changing and/or upgrading such equipment may also, as a result, be cost-prohibitive.

It would, therefore, be desirable to provide an immersive simulation apparatus and method that is less costly in both monetary terms and in terms of size, maintenance and upgrade overheads, and it is an object of aspects of the present invention to address at least some of these issues.

In accordance with a first aspect of the present invention, there is provided a mixed reality vehicle control simulator comprising a headset for placing over a user's eyes, in use, said headset including a screen, the simulator further comprising a processor configured to display on said screen a three dimensional environment consisting of scenery, one or more interactive controls for enabling a user to simulate vehicle control actions, said processor being further configured to receive, from said one or more interactive controls, data representative of one or more parameters determinative of vehicle movement and update said scenery displayed on said screen in accordance with said parameters so as to simulate vehicle movement therein.

The simulator may further comprise a physical vehicle control structure, such as a cockpit structure, within which a user is located, in use, said physical control structure including said one or more interactive controls. However, in alternative exemplary embodiments, there is no physical control structure, and the control structure, e.g. a cockpit, is provided in virtual form and blended into the 3D environment displayed on the screen.

The simulator may include image capture means for capturing images of the real world in the vicinity of the user, wherein said processor may be configured to blend images of said real world environment into said three-dimensional environment to create a mixed reality environment representative of a user's field of view and said virtual scenery and display said mixed reality environment on said screen. The image capture means may comprise at least one image capture device mounted on said headset so as to be substantially aligned with a user's eyes, in use.

In an exemplary embodiment of the invention, the simulator may comprise a flight simulator and said data representative of one or more parameters determinative of vehicle movement comprises one or more of air speed, direction, and altitude.

The virtual scenery may be derived from satellite images of the Earth, and/or from animated or computer generated images of an environment.

Another aspect of the invention extends to a method of providing an immersive flight simulation system comprising at least one headset for placing over a user's eyes, in use, said headset including a screen, the method comprising configuring a processing module to display on said screen a three dimensional environment consisting of virtual scenery, receive, from one or more interactive controls included in said system, data representative of one or more parameters determinative of aircraft movement and update said scenery displayed on said screen in accordance with said parameters so as to simulate aircraft movement therein.

Aspects of the invention extend to a program or plurality of programs arranged such that when executed by a computer system or one or more processors, it/they cause the computer system or the one or more processors to operate in accordance with the method described above.

Still further, the present invention extends to a machine readable storage medium storing a program or at least one of the plurality of programs described above.

These and other aspects of the present invention will be apparent from the following specific description, in which embodiments of the present invention are described, by way o examples only, and with reference to the accompanying drawings, in which:
Figure 1 is a front perspective view of a headset for use in a system according to an exemplary embodiment of the present invention;
Figure 2 is a schematic block diagram of a system according to an exemplary embodiment of the present invention;
Figure 3 is a schematic diagram illustrating a flight simulation system according to a first exemplary embodiment of the present invention;
Figure 4 is a schematic diagram illustrating a flight simulation system according to a second exemplary embodiment of the present invention;
Figure 5A is a schematic side view diagram illustrating an immersive dome flight simulator according to the prior art; and
Figure 5B is a schematic plan view diagram illustrating an immersive dome flight simulator according to the prior art.

Virtual reality systems are known, comprising a headset which, when placed over a user's eyes, creates and displays a three dimensional virtual environment in which a user feels immersed and with which the user can interact in a manner dependent on the application. For example, the virtual environment created may comprise a game zone, within which a user can play a game.

More recently, mixed reality systems have been developed, in which an image of a real world object can be captured, rendered and placed within a 3D virtual reality environment, such that it can be viewed and manipulated within that environment in the same way as virtual objects therein. Other mixed reality systems have also been developed that enable virtual images to be blended into a user's view of the real world, and it is envisaged, that data from one or more external data sources can be visually represented and placed within the mixed reality environment thus created such that multiple data sources are displayed simultaneously in three dimensions.

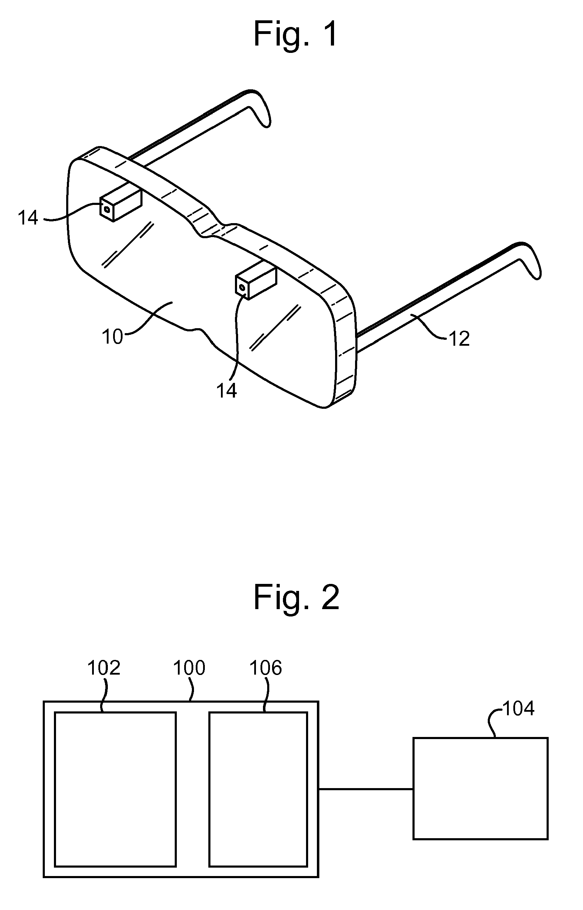

Referring to Figure 1 of the drawings, a system according to a present invention may comprise a headset comprising a visor 10 having a pair of arms 12 hingedly attached at opposing sides thereof in order to allow the visor to be secured onto a user's head, over their eyes, in use, by placing the curved ends of the arms 12 over and behind the user's ears, in a manner similar to conventional spectacles. It will be appreciated that, whilst the headset is illustrated herein in the form of a visor, it may alternatively comprise a helmet for placing over a user's head, or even a pair of contact lenses or the like, for placing within the user's eyes, and the present invention is not intended to be in any way limited in this regard. Also provided on the headset, is a pair of image capture devices 14 for capturing images of the environment, such image capture devices being mounted roughly aligned with a user's eyes in use.

The system of the present invention further comprises a processor, which is communicably connected in some way to a screen which provided inside the visor 10. Such communicable connection may be a hard wired electrical connection, in which case the processor and associated circuitry will also be mounted on the headset. However, in an alternative exemplary embodiment, the processor may be configured to wirelessly communicate with the visor, for example, by means of Bluetooth or similar wireless communication protocol, in which case, the processor need not be mounted on the headset but can instead be located remotely from the headset, with the relative allowable distance between them being dictated and limited only by the wireless communication protocol being employed. For example, the processor could be mounted on or formed integrally with the user's clothing, or instead located remotely from the user, either as a stand-alone unit or as an integral part of a larger control unit, for example.

Referring to Figure 2 of the drawings, a system according to an exemplary embodiment of the invention comprises, generally, a headset 100, incorporating a screen 102, a processor 104, and a pair of external digital image capture devices (only one shown) 106.

In a flight simulator, according to a first exemplary embodiment of the present invention, and referring additionally to Figure 3 of the drawings, a physical cockpit 200, complete with controls, is provided on a platform (not shown), which may be mounted on a motion rig (not shown) which imparts movement to the cockpit structure 200 to simulate yaw, pitch and roll manoeuvers. A user 202 sits within the cockpit 200, in use, and places a mixed reality headset 100 over their eyes. The processor of the mixed reality system is configured to display, in three dimensions, scenery simulating the 3D environment in which the 'flight' will appear to take place. As the simulated flight progresses, the real world images seen by the user 202 are updated in real time, and in accordance with signals received by the processor from the cockpit controls, indicative of speed of 'travel', direction, altitude, etc., all of which parameters are dependent on the user's performance in terms of flight control. It will be appreciated by a person skilled in the art that many techniques and packages are available which simulate real movement through 3D scenery, wherein parameters such as speed, altitude, direction etc. are fed from the controls and entered into software code that is run within a 3D scenery engine, causing the scenery displayed to change and thereby simulating movement within the 3D environment. Many such interfaces are known in the art, which work both with animated or computer generated ('virtual') scenery and captured image resources such as Google Earth, and the present invention is not necessarily intended to be limited in this regard.

The image capture devices 106 on the headset 100 capture images of the user's immediate environment. Thus, images are captured in respect of the cockpit 200 and the user's own body, depending on the user's field of view at any time. The images thus captured are transmitted to the processor in the mixed reality system and blended into the three dimensional environment displayed on the screen, such that the user is provided with a fully immersive, mixed reality environment.

The concept of real time image blending for augmented or mixed reality is known, and several different techniques have been proposed. The present invention is not necessarily intended to be limited in this regard. However, for completeness, one exemplary method for image blending will be briefly described. Thus, in respect of an object or portion of a real world image to be blended into the 3D 'virtual' environment displayed on the screen, a threshold function may be applied in order to extract that object from the background image. Its relative location and orientation may also be extracted and preserved by means of marker data. Next, the image and marker data is converted to a binary image, possibly by means of adaptive thresholding (although other methods are known). The marker data and binary image are then transformed into a set of coordinates that match the location within the 3D environment in which they will be blended. Such blending is usually performed using black and white image data. Thus, if necessary, colour data sampled from the source image can be backward warped, using homography, to each pixel in the resultant virtual scene. All of these computational steps require minimal processing and time and can, therefore, be performed quickly and in real (or near real) time. Thus, as the user's field of view and/or external surroundings change, image data within the mixed reality environment can be updated in real time.

The user 200 interacts with the controls in the cockpit 200 in a conventional manner in order to control all aspects of the 'flight'. Signals representative of user actions, flight status, and other relevant data is fed to the system processor 104 (including a 3D scenery engine) and the mixed reality environment displayed on the user's screen is updated accordingly, in terms of both the scenery change caused by apparent movement through the 3D environment, and any other respective data displayed therein.

In an alternative embodiment of the present invention, and with reference to Figure 4 of the drawings, the cockpit may be eliminated altogether, and a virtual cockpit environment may be blended into the 3D environment displayed on the user's screen, thereby providing a mixed reality environment which includes a 3D view of the environment in which the 'flight' appears to be taking place, and the cockpit in which the user appears to be located. A number of physical controls 204 may, in this case, be provided within an operational area in which the user sits, in use, on a chair 206 provided for this purpose. Once again, signals from the controls 204 may be received by the mixed reality system processor 104 and used to selectively updated the images seen by the user as they 'travel' through the 3D environment. In this case, headset trackers may be provided in the environment, and/or the headset 100 itself may include orientation sensors, so as to determine the orientation of the user's head and the direction of their gaze, such that their field of view can be determined and the angular representation of the 'fixed' structure (i.e. the cockpit) can be adapted accordingly, so as to maintain a realistic immersive view. Once again, the image capture devices 106 on the headset 100 will capture images of the user's own body and the processor 104 is configured to blend images thereof into the mixed reality environment as appropriate.

Thus, aspects of the present invention provide a mixed reality flight simulator which is able to provide a similar immersive experience to that provided by conventional dome simulators with a greatly reduced infrastructure requirements, which has an impact on physical size (and ease of transportation), costs, maintenance and ease of upgrade.

It is envisaged that the mixed reality technology can be introduced into flight simulation technologies at a number of different levels, and two exemplary embodiments have been described above. In a first exemplary embodiment, as described with reference to Figure 3 of the drawings, a physical cockpit structure, of the type employed in conventional immersive dome simulators, is provided, wherein the moving scenery is displayed on the screen in the mixed reality headset (controlled by the user's interaction with the interactive control functions within the cockpit structure), and the image capture devices capture images of the user's real world environment, including their own bodies, the cockpit structure and any other people they may need to interact with during a training session, and those images are rendered and blended into the 3D environment displayed on the screen to provide the required immersive environment.

In an alternative exemplary embodiment, as described above with reference to Figure 4 of the drawings, the physical cockpit structure is eliminated, leaving just a seat for the user and one or more physical controls with which they can interact. In this case, a virtual representation of the cockpit is blended into the 3D environment displayed on the screen, as well as rendered and blended images captured from the user's real world environment, to provide the required immersive effect. In either case, the cockpit structure, or the seat, may be mounted on a motion rig to simulate yaw, pitch and roll of the simulated vehicle, thereby increasing the realism of the overall training experience.

As previously stated, there are many benefits associated with the reduction in physical infrastructure, including a reduction in cost of purchase, reduction in transport/logistics burden, in addition to the software nature of the virtual cockpit (in some exemplary embodiments of the invention), which can be modified very quickly and at a very low cost of change. The reduction in cost and the ability to network such systems could also allow for a greater number of interconnected simulators which can be relatively easily adapted between aircraft and even roles.

It will be apparent to a person skilled in the art, from the foregoing description, that modifications and variations can be made to the described embodiments, without departing from the scope of the invention as claimed.

## Claims

1. A mixed reality vehicle control simulator comprising a headset for placing over a user's eyes, in use, said headset including a screen, the simulator further comprising a processor configured to display on said screen a three dimensional environment consisting of virtual scenery, one or more interactive controls for enabling a user to simulate vehicle control actions, said processor being further configured to receive, from said one or more interactive controls, data representative of one or more parameters determinative of vehicle movement and update said scenery displayed on said screen in accordance with said parameters so as to simulate vehicle movement therein.

2. A simulator according to claim 1, further comprising a physical vehicle control structure within which a user is located, in use, said physical control structure including said one or more interactive controls.

3. A simulator according to claim 1, wherein said processor is configured to display on said screen, within said three dimensional environment, a virtual image of a vehicle control structure.

4. A simulator according to any of claims 1 to 3, comprising a flight simulator, wherein said vehicle control structure is a cockpit

5. A simulator according to any of the preceding claims, including image capture means for capturing images of the real world in the vicinity of the user, wherein said processor is configured to blend images of said real world environment into said three-dimensional environment to create a mixed reality environment representative of a user's field of view and said virtual scenery and display said mixed reality environment on said screen.

6. A simulator according to claim 5, wherein said image capture means comprises at least one image capture device mounted on said headset so as to be substantially aligned with a user's eyes, in use.

7. A simulator according to claim 4, wherein said data representative of one or more parameters determinative of vehicle movement comprises one or more of air speed, direction, and altitude.

8. A simulator according to any of the preceding claims, wherein said virtual scenery is derived from satellite images of the Earth.

9. A simulator according to any of claims 1 to 7, wherein said virtual scenery is derived from animated or computer generated images of an environment.

10. A method of providing an immersive flight simulation system comprising at least one headset for placing over a user's eyes, in use, said headset including a screen, the method comprising configuring a processing module to display on said screen a three dimensional environment consisting of virtual scenery, receive, from one or more interactive controls included in said system, data representative of one or more parameters determinative of aircraft movement and update said scenery displayed on said screen in accordance with said parameters so as to simulate aircraft movement therein.

11. A program or plurality of programs arranged such that when executed by a computer system or one or more processors, it/they cause the computer system or the one or more processors to operate in accordance with the method of claim 10.

12. A machine readable storage medium storing a program or at least one of the plurality of programs according to claim 11.
